## Europäisches Patentamt

(19) **European Patent Office**

**Office européen des brevets**

(11) Veröffentlichungsnummer: **0 187 277**
**B1**

(12) **EUROPÄISCHE PATENTSCHRIFT**

(45) Veröffentlichungstag der Patentschrift:
03.05.89

(51) Int. Cl.⁴: **B 21 F 27/10**, B 23 K 37/00

(21) Anmeldenummer: **85115560.6**

(22) Anmeldetag: **06.12.85**

(54) **Schweissmaschine für Drahtgitter, insbesondere für Betonbewehrungszwecke.**

(30) Priorität: **11.01.85 DE 3500717**

(43) Veröffentlichungstag der Anmeldung:
**16.07.86 Patentblatt 86/29**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**AT-B- 292 427**
**DE-A- 2 845 912**
**DE-B- 260 664**
**DE-C- 3 327 243**
**GB-A- 1 291 005**

(73) Patentinhaber: **Baustahlgewebe GmbH,**
**Burggrafenstrasse 5, D-4000 Düsseldorf 11 (DE)**

(72) Erfinder: **Sotonyi, Thomas, Hauptstrasse 37,**
**D-3004 Isernhagen (DE)**
Erfinder: **Webers, Heinz, Ackerstrasse 4,**
**D-4005 Meerbusch 2 (DE)**

(74) Vertreter: **Patentanwaltsbüro Cohausz & Florack,**
**Schumannstrasse 97, D-4000 Düsseldorf 1 (DE)**

## Beschreibung

Die Erfindung bezieht sich auf eine Schweißmaschine für aus Längs- und Querdrähten bestehende und an deren Kreuzungspunkten verschweißte Drahtgitter, insbesondere für Betonbewehrungszwecke, bestehend aus mehreren nebeneinander angeordneten und auf Schienen mittels eines Verfahrantriebes an bestimmten durch die vorgegebenen Längsdrahtabstände Positionen einzeln verfahrbaren Schweißeinheiten, die jeweils aus einer Längsdrahtzuführung und einer unteren und oberen gegen die untere bewegliche Schweißelektrode und einem Schweißtrafo bestehen.

Drahtgitter für Betonbewehrungszwecke unterscheiden sich nicht nur in den Längsdraht- und Querdrahtabständen, sondern auch in den Drahtstärken. Um mit einer Schweißmaschine eine möglichst große Palette verschiedenartiger Drahtgitter schweißen zu können, sollte eine Schweißmaschine nicht nur hinsichtlich des Längsdrahtabstandes einstellbar sein, sondern auch hinsichtlich des Schweißdruckes eines jeden Elektrodenpaares und der Schweißleistung. Diese Forderungen werden mit bekannten Schweißmaschinen allenfalls teilweise erfüllt.

Bei einer bekannten Schweißmaschine (AT-B 260 664), die bis auf den Verfahrantrieb für die Schweißeinheiten mit der Schweißmaschine der eingangs genannten Art übereinstimmt, läßt sich sowohl der Schweißdruck als auch die Schweißleistung eins jeden Elektrodenpaares wegen der Einzelansteuerung der Elektrodenpaare und des für jede Schweißeinheit vorgesehenen eigenen Transformators individuell einstellen. Auch der Ausbau einzelner Schweißeinheiten und das Auswechseln einzelner Schweißeinheiten ist leicht möglich, denn die Schweißeinheiten sind auf quer zu den Schweißdrähten verlaufenden Schienen eines unter den Schweißeinheiten angordneten Kastenträgers im wesentlichen stehend gelagert. Ihr Ausbau ist deshalb ohne weitere Montagearbeiten durch einfaches Herausheben möglich. Durch Verschieben der Schweißeinheiten von Hand lassen sich die einzelnen Schweißeinheiten in die gewünschten Positionen bringen und in diesen Positionen an den Schienen festklemmen. Von Nachteil ist bei einer solchen Schweißmaschine, daß die einzelnen Schweißeinheiten nicht motorisch in die gewünschten Positionen verfahren werden. Darüber hinaus bringt die bestehende Anordnung der Schweißeinheiten auf den Längsschienen Stabilitätsprobleme mit sich.

Bedienungsfreundlicher hinsichtlich der Positionierung der Elektrodenpaare ist eine andere bekannte Schweißmaschine (AT-B 292 427, DE-C 1 943 198), die bis auf die Ausbildung der Schweißeinheiten mit der Schweißmaschine der eingangs genannten Art übereinstimmt. Bei dieser Schweißmaschine ist als Verfahrantrieb für die Schweißeinheiten mindestens eine sich über die gesamte Breite der Schweißmaschine erstreckende, angetriebene Spindel vorgesehen, an die die Schweißeinheiten mittels eines Kupplungselementes selektiv kuppelbar sind. Weil bei dieser Schweißmaschine jeweils mehrere Elektroden aus derselben Schweißstromquelle mit Strom versorgt werden, läßt sich keine individuelle Schweißstromeinstellung an den einzelnen Schweißeinheiten vornehmen. Ferner ist auch eine individuelle Schweißdruckbeaufschlagung an den einzelnen Schweißeinheiten nicht möglich, weil alle Elektroden von einem gemeinsamen Druckbalken beaufschlagt werden. Schließlich ist von Nachteil, daß bei dieser Schweißmaschine keine Maßnahmen für ein schnelles Auswechseln einzelner Schweißeinheiten getroffen sind.

Wesentlich variabler in den Schweißparametern (Längsdrahtabstand, Schweißdruck und Schweißstrom) ist eine bekannte Schweißmaschine der eingangs genannten Art (DE-C 3 327 243). Bei dieser Schweißmaschine ist jedes Elektrodenpaar ein Teil einer kompakten flachen Schweißeinheit, die einen eigenen Schweißtrafo aufweist und die ein eigenes Organ für die Schweißdruckbeaufschlagung hat. Die aufrecht stehend auf den Schienen angeordneten flachen Schweißeinheiten sind über individuell betätigbare Kupplungseinheiten an eine gemeinsame Antriebsspindel ankuppelbar, so daß sie einzeln oder auch gemeinsam an die durch die vorgegebenen Längsdrahtabstände bestimmten Positionen verfahren werden können.

Obgleich mit einer solchen Schweißmaschine die Palette der schweißbaren Drahtgitter erheblich erweitert ist, ist sie für Drahtgitter mit extrem unterschiedlichen Schweißparametern (Schweißleistung und gegebenenfalls Schweißdruck) nicht geeignet. Der jeder Schweißeinheit zugeordnete Schweißtrafo läßt nur in einem gewissen Bereich die Einstellung der Schweißleistung zu. Das gleiche gilt für die Organe für die Schweißdruckbeaufschlagung.

Schließlich ist von Nachteil, daß für die Durchführung von Wartungs- und Reparaturarbeiten außerhalb der Maschine aufwendige Montagearbeiten notwendig sind, um die einzelnen Einheiten aus der Maschine auszubauen.

Der Erfindung liegt die Aufgabe zugrunde, eine Schweißmaschine der eingangs genannten Art dahingehend zu verbessern, daß es möglich ist, einzelne Schweißeinheiten schnell auszuwechseln.

Diese Aufgabe wird erfindungsgemäß dadurch gelöst, daß die Schweißeinheiten (8—18) zwischen den Schienen derart angeordnet sind, daß sie einzeln nach oben auswechselbar sind, daß von den Schweißeinheiten mindestens eine den Verfahrantrieb aufweist und daß die übrigen antriebslosen Schweißeinheiten untereinander und an die den Verfahrantrieb aufweisende Schweißeinheit nach Art eines Zuges über einzeln betätigbare Verbindungselemente verbunden sind, wobei von dem Zug die antriebslosen Schweißeinheiten an den durch die vorgegebenen Längsdrahtabschnitte bestimmten Positionen entsprechend ihrer Position in der Zugreihe einzeln abhängbar sind.

Bei der erfindungsgemäßen Schweißmaschine können in Abhängigkeit von dem geforderten Schweißprogramm für die einzelnen Gitter Schweißeinheiten beliebiger Schweißleistungen gruppiert werden, wie es für die Verschweißung eines Drahtgitters mit extrem unterschiedlichen Längsdrahtdurchmessern erforderlich ist. Da bis auf die Leistung der einzelnen Einheit alle Schweißeinheiten bis auf die den Verfahrantrieb aufweisende Schweißeinheit alle den gleichen Aufbau haben, läßt sich jede Schweißeinheit mit jeder anderen Schweißeinheit verbinden. Da nur eine Schweißeinheit einen Verfahrantrieb aufzuweisen braucht, alle übrigen Schweißeinheiten nur Verbindungselemente benötigen, ist nicht nur der für das Verfahren erforderliche Aufwand gering, sondern auch das Auswechseln der einzelnen Einheit einfach und wenig zeitaufwendig.

Nach einer Augestaltung der Erfindung weist der Verfahrantrieb im Bereich beider Schienen ein Antriebsmittel auf, wobei die Antriebsmittel synchron angetrieben sind. Diese Ausgestaltung der Erfindung ist zweckmäßig, um bei den schmalen Einheiten ein Verkanten zu verhindern.

Nach einer bevorzugten Ausgestaltung der Erfindung weisen die Antriebsmittel ein sich jeweils längs jeder Schiene erstreckendes Zugmittel oder Widerlager auf. Nach einer ersten Alternative ist der motorische Antrieb des Verfahrantriebes auf der einen Schweißeinheit aufgebaut und mit den beiden Zugmitteln und/oder Widerlagern verbunden. Nach einer zweiten Alternative treibt der motorische Antrieb des Verfahrantriebes die beiden Zugmittel und/oder Widerlager an, mit denen die Schweißeinheit fest verbunden ist.

Um die einzelnen Schweißeinheiten zu positionieren, sollte der angetriebenen Schweißeinheit ein Wegmesser einer Steuereinrichtung zugeordnet sein, die die den Längsdrahtabständen entsprechenden Verfahrstrecken des Zuges und die Betätigung der Verbindungselemente der einzelnen Schweißeinheiten steuert. Die Steuereinheit kann einen Rechner aufweisen, dem die Längsdrahtabstände vorgegeben werden und der dann unter Berücksichtigung der mittels Verbindungselemente aneinandergereihten Schweißeinheiten den Zug beim Verfahren anhält, um die einzelne Schweißeinheit zu lösen.

Da die einzelnen Schweißeinheiten für das Verfahren auf den Schienen wie die Wagen eines Zuges an die den Verfahrantrieb aufweisende Schweißeinheit angekuppelt sind und nicht jede Einheit unmittelbar angetrieben wird, kommt der Seitenstabilität der Schweißeinheiten besondere Bedeutung zu. Diese Forderung läßt sich bei der Erfindung leicht mit der weiteren Forderung nach leichtem Auswechseln der einzelnen Schweißeinheiten dadurch erfüllen, daß die Schweißeinheiten hängend zwischen den Schienen derart angeordnet sind, daß sie einzeln nach oben auswechselbar sind. Bei dieser Ausgestaltung erübrigen sich sonst eventuell notwendige zusätzliche Führungselemente oder Transportorgane, die das Auswechseln der Schweißeinheiten nach oben behindern könnten.

Im folgenden wird die Erfindung anhand einer ein Ausführungsbeispiel darstellenden Zeichnung näher erläutert. Im einzelnen zeigen

Fig. 1 die Schweißmaschine vor dem Positionieren der einzelnen Schweißeinheiten in Vorderansicht,

Fig. 2 die Schweißmaschine gemäß Fig. 1 nach dem Positionieren der einzelnen Schweißeinheiten in Vorderansicht,

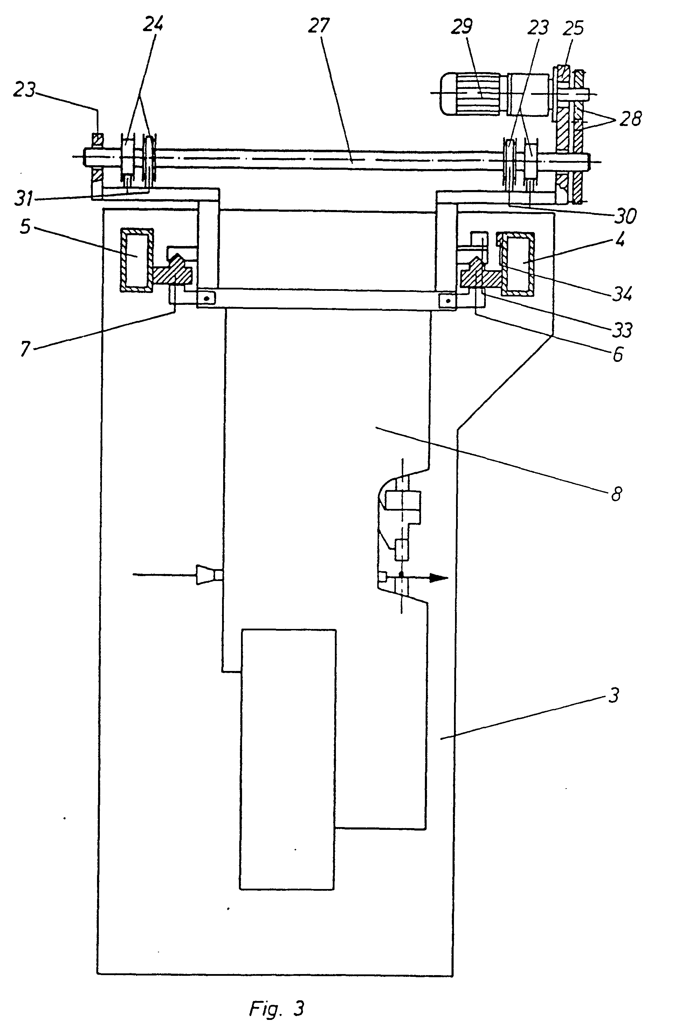

Fig. 3 die Schweißmaschine gemäß Fig. 1 im Querschnitt nach der Linie I–I der Fig. 1 und

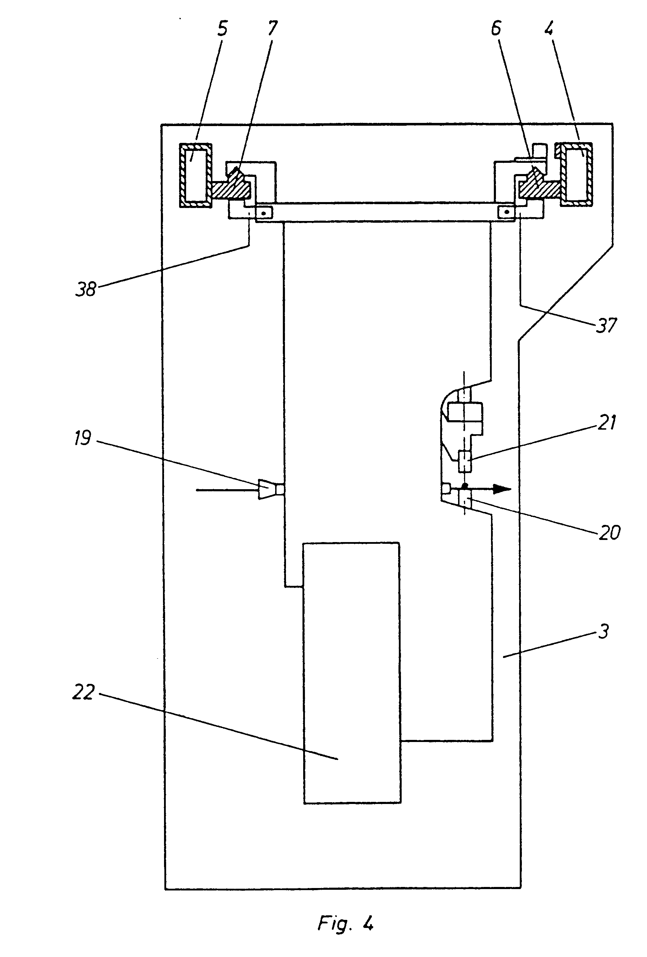

Fig. 4 die Schweißmaschine gemäß Fig. 1 im Querschnitt nach der Linie II–II der Fig. 1.

Das Schweißmaschinengerät besteht im wesentlichen aus einem Sockel 1 und zwei Seitenständern 2, 3 sowie zwei im oberen Bereich mit großem Abstand voneinander angeordneten Trägern 4, 5 mit innenseitig angeordneten prismatischen Führungsschienen 6, 7. Zwischen den beiden Ständern 2, 3 sind mehrere flache Schweißeinheiten 8 bis 18 hängend und verfahrbar auf den Schienen 6, 7 gelagert.

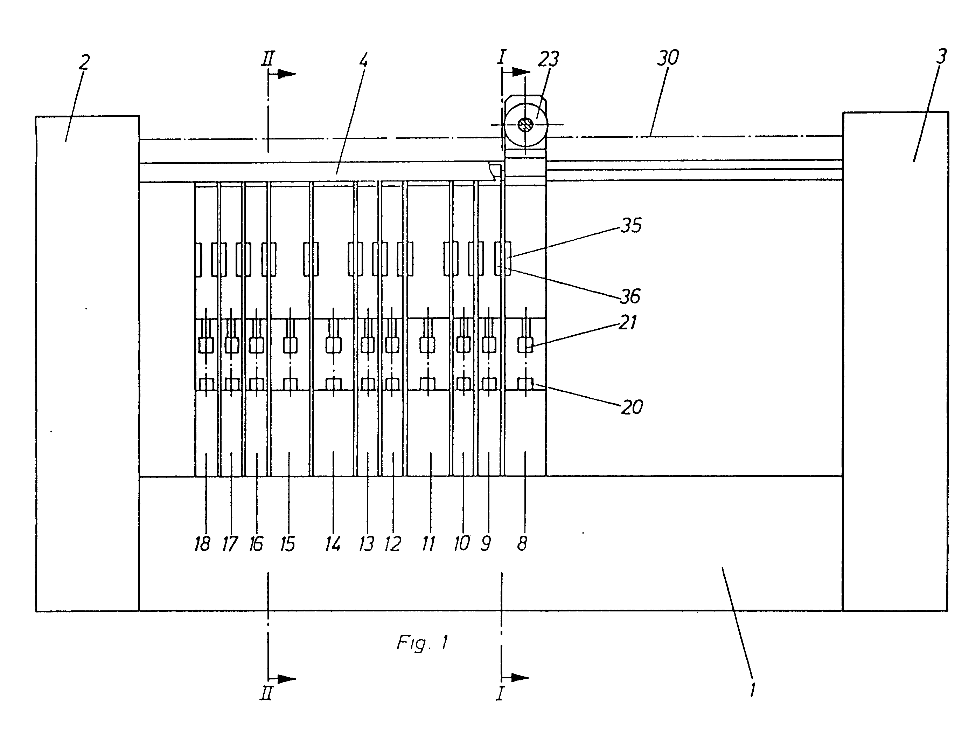

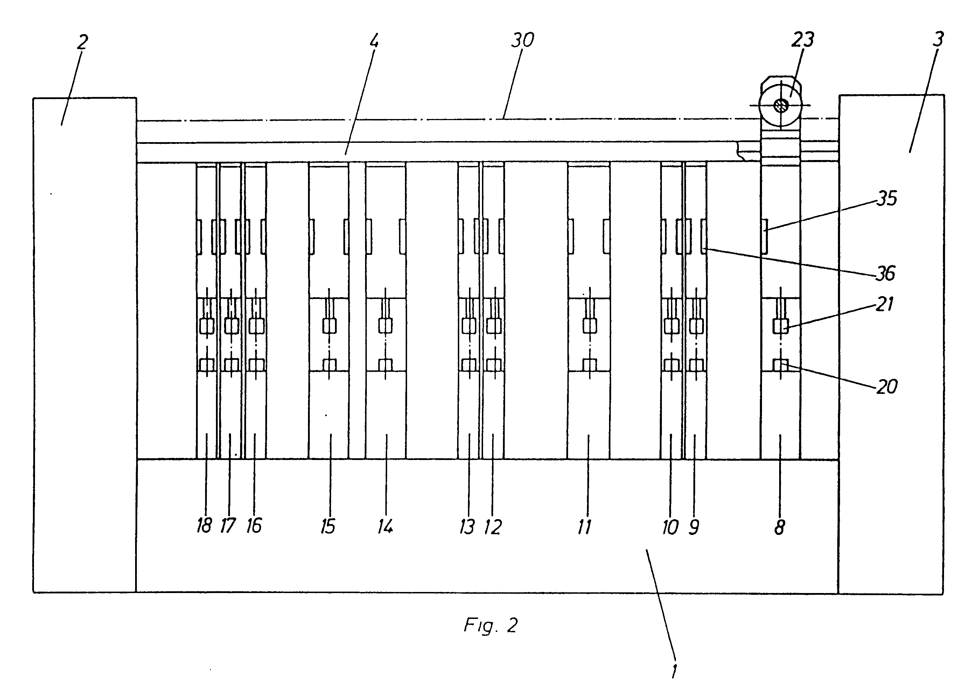

Jede Schweißeinheit besteht aus einer rohrförmigen Längsdrahtzuführung 19, einer unteren feststehenden Schweißelektrode 20, einer oberen, durch nicht dargestellte Betätigungsmittel heb- und senkbaren Schweißelektrode 21 und einem Schweißtrafo 22. Wie die Figuren 1 und 2 zeigen, haben die flachen Schweißeinheiten eine unterschiedliche Breite. Die unterschiedliche Breite wird erforderlich bei stark unterschiedlichen Anforderungen an Schweißleistung und -druck der einzelnen Schweißeinheit. Bei größerer Schweißleistung wird nämlich ein voluminöserer Schweißtrafo benötigt. Entsprechend wird bei größerem Schweißdruck ein voluminöseres Organ, z.B. eine Zylinderkolbeneinheit, benötigt. Ein größerer Schweißdruck macht auch eine steifere Konstruktion für die Schweißeinheit erforderlich.

Die Schweißeinheit 8 unterscheidet sich von allen übrigen Schweißeinheiten 9 bis 18 dadurch, daß sie einen eigenen Antrieb hat. Der Antrieb weist eine mit Wickelrollenpaaren 23, 24 bestückte, von der Schweißeinheit 8 in Lagerböcken 25, 26 getragene Welle 27 auf, die über ein Vorgelege 28 von einem Antriebsmotor 29 angetrieben wird. Auf die Wickelrollenpaare 23, 24 ist jeweils ein an den Seitenständern 2, 3 angeschlagenes Zugmittel 30, 31 aufwickelbar. Mit diesem Antrieb ist es in Abhängigkeit von der Drehrichtung also möglich, die Schweißeinheit 8 in die eine oder andere Richtung zu verfahren.

Statt dieses Antriebes könnte auch ein anderer Antrieb vorgesehen sein, z.B. zwei gemeinsam angetriebene Spindeln, an die mittels Transportmuttern die Schweißeinheit 8 gekuppelt ist. Auch wäre es denkbar, daß anstelle der Wickelrollenpaare 23, 24 auf der Welle 27 Ritzel sitzen, die jeweils in eine sich längs der Schienen 6, 7 erstrekkende Zahnstange eingreifen. Schließlich bietet sich als weitere Möglichkeit an, die Zugmittel selbst anzutreiben und an diese Zugmittel die Schweißeinheit 8 zu befestigen.

Die angetriebene Schweißeinheit 8 weist ferner einen Wegmesser 33 auf, der beispielsweise die in gleichen Abständen auf einer ortsfest angeordneten Schiene 34 vorgesehenen Marken abzählt. Die vom Wegmesser 33 gemessene Weginformation wird an eine nicht dargestellte Steuereinrichtung weitergeleitet, die die verfahrbare Einheit 8 bestimmte Wegstrecken verfahren läßt.

Die Schweißeinheiten 8 bis 18 können sich beispielsweise durch, zwischen ihnen angeordnete, fernbetätigbare Verbindungselemente 35, 36 beim Zusammenfahren selbsttätig aneinanderhängen. Die Lösung dieser Verbindung ist aber nur von der Steuereinheit aus möglich.

Unter der Voraussetzung, daß die Schweißmaschine mit anforderungsgemäßen Schweißeinheiten 8—18 ausgerüstet ist, werden die Schweißeinheiten 9 bis 18 durch die verfahrbare Schweißeinheit 8 in die Grundstellung zusammengeschoben. Dabei werden diese durch die Verbindungselemente 35, 36 miteinander fest verbunden. An der Steuereinrichtung werden dann die gewünschten Längsdrahtabstände eingestellt. Die Schweißeinheiten 9—18 werden wie die Wagen eines Zuges von der verfahrbaren Schweißeinheit 8 mitgenommen. Dieser Zug hält in Abhängigkeit von der der Steuereinrichtung vorgegebenen Position an und löst, beginnend mit der zu verfahrenden letzten Schweißeinheit 15 an den einzelnen Stoppstellen die Schweißeinheiten 15 bis 9. Damit die Schweißeinheiten in dieser vorgesehenen Position verbleiben, werden sie durch Klemmelemente 37, 38 fixiert.

Sofern nicht alle Schweißeinheiten für die Herstellung eines Drahtgitters benötigt werden, werden die überzähligen Einheiten, wenn möglich zwischen den zum Schweißen benötigten Einheiten belassen oder aus dem Schweißbereich heraus in die Seitenräume gefahren.

Die erfindungsgemäße Schweißmaschine ermöglicht auf einfache Art und Weise und mit geringstem Aufwand sowohl den Ausbau für Reparatur- und Wartungszwecke als auch eine schnelle Umrüstung in Abhängigkeit von dem herzustellenden Drahtgitter sowohl hinsichtlich der geforderten Leistung an den zu verschweißenden Kreuzungspunkten als auch hinsichtlich der Längsdrahtabstände.

## Patentansprüche

1. Schweißmaschine für aus Längs- und Querdrähten bestehende und an deren Kreuzungspunkten verschweißte Drahtgitter, insbesondere für Betonbewehrungszwecke, bestehend aus mehreren nebeneinander angeordneten und auf Schienen (6, 7) mittels eines Verfahrantriebes (23—29) an bestimmten durch die vorgegebenen Längsdrahtabstände Positionen einzeln verfahrbaren Schweißeinheiten (9—18), die jeweils aus einer Längsdrahtzuführung (19) und einer unteren und oberen gegen die untere bewegliche Schweißelektrode (20, 21) und einem Schweißtrafo bestehen, dadurch gekennzeichnet, daß die Schweißeinheiten (8—18) zwischen den Schienen derart angeordnet sind, daß sie einzeln nach oben auswechselbar sind, daß von den Schweißeinheiten (8—18) mindestens eine den Verfahrantrieb (23—29) aufweist und daß die übrigen antriebslosen Schweißeinheiten (9—18) untereinander und an die den Verfahrantrieb (23—29) aufweisende Schweißeinheit (8) nach Art eines Zuges über einzeln betätigbare Verbindungselemente (35, 36) verbunden sind, wobei von dem Zug die antriebslosen Schweißeinheiten (9—18) an den bestimmten Positionen entsprechend ihrer Position in der Zugreihe einzeln abhängbar sind.

2. Schweißmaschine nach Anspruch 1, dadurch gekennzeichnet, daß die Schweißeinheiten (8—18) zwischen den Schienen (6, 7) hängend angeordnet sind.

3. Schweißmaschine nach Anspruch 1 oder 2, dadurch gekennzeichnet, daß der Verfahrantrieb (23—29) im Bereich beider Schienen (6, 7) ein Antriebsmittel (23/30, 24/31) aufweist, wobei die Antriebsmittel (23/30, 24/31) synchron angetrieben werden.

4. Schweißmaschine nach Anspruch 3, dadurch gekennzeichnet, daß die Antriebsmittel (23/30, 24/31) ein längs jeder Schiene (6, 7) sich erstreckendes Zugmittel (30, 31) oder Widerlager aufweisen.

5. Schweißmaschine nach Anspruch 4, dadurch gekennzeichnet, daß der motorische Antrieb (29) des Verfahrantriebes auf der einen Schweißeinheit (8) aufgebaut ist und mit beiden Zugmitteln (30, 31) und/oder Widerlagern gekuppelt ist.

6. Schweißmaschine nach Anspruch 4, dadurch gekennzeichnet, daß der motorische Antrieb des Verfahrantriebes die beiden Zugmittel und/oder Widerlager antreibt, an die die eine Schweißeinheit gekuppelt ist.

7. Schweißmaschine nach einem der Ansprüche 1 bis 6, dadurch gekennzeichnet, daß der angetriebenen Schweißeinheit (8) ein Wegmesser (33) einer Steuereinrichtung zugeordnet ist, die den Längsdrahtabständen entsprechende Verfahrstrecken des Zuges und über die Verbindungselemente (35, 36) das Abhängen der einzelnen Schweißeinheiten (9—18) steuert.

## Claims

1. A welding machine for wire meshes which consist of longitudinal and transverse wires and are welded at their points of intersection, more particularly for concrete reinforcing purposes, comprising a number of welding units (9—18) which are disposed one beside the other and can be individually moved on rails (6, 7) by means of a displacing drive (23—29) to positions determined by the given spacing of the longitudinal wires and which each comprise a longitudinal wire supply means (19), a lower welding electrode (20) and an upper electrode (21) which can be moved towards the lower electrode, and a welding transformer, characterized in that the welding units (8—18) are so disposed between the rails that they can be interchanged individually in the upward direction; at least one of the welding units (8—18) has the displacing drive (23—29); and the other, undriven welding units (9—18) are connected after the fashion of a train to one another and to the welding unit (8) having the displacing drive (23, 29) via individually actuable connecting elements (35, 36), the undriven welding units (9–18) being individually disconnectable from the train at the given positions in accordance with their positions in the train.

2. A welding machine according to claim 1, characterized in that the welding units (8–18) are disposed suspended between the rails (6, 7).

3. A welding machine according to claims 1 or 2, characterized in that the displacing drive (23–29) has a driving means (23/30, 24/31) in the zone of the two rails (6, 7), the driving means (23/30, 24/31) being synchronously driven.

4. A welding machine according to claim 3, characterized in that the driving means (23/30, 24/31) have a pulling means (30, 31) or abutment extending along each rail (6, 7).

5. A welding machine according to claim 4, characterized in that the motor drive (29) of the displacing drive is constructed on one welding unit (8) and is coupled to both pulling means (30, 31) and/or abutments.

6. A welding machine according to claim 4, characterized in that the motor drive ot the displacing drive drives the two pulling means and/or abutments, to which the one welding unit is coupled.

7. A welding machine according to any of claims 1 to 6, characterized in that associated with the driven welding unit (8) is a travel measuring device (33) of a control system which controls the moving distances of the train corresponding to the spacing of the longitudinal wires and via the connecting elements (35, 36) controls the disconnection of the individual welding units (9–18).

## Revendications

1. Machine à souder pour un grillage en fils constitué de fils métalliques longitudinaux et transversaux soudés à leurs points de croisement, notamment à usage d'armature de béton, constituée d'une pluralité d'unités de soudage (9–18) disposées les unes à côté des autres et pouvant être déplacées individuellement sur des rails (6, 7), au moyen d'un entraînement de déplacement, qui sont constituées respectivement d'une alimentation de fil longitudinal (19) et d'une électrode de soudage inférieure (20) et d'une électrode de soudage supérieure (21) mobile par rapport à l'électrode de soudage inférieure (20), ainsi que d'un transformateur de soudage, caractérisée par le fait que les unités de soudage (8–18) sont disposées entre les rails de telle manière qu'elles sont échangeables individuellement vers le haut, que, parmi les unités de soudage (8–18), au moins une présente l'entraînement de déplacement (23–29), et que les autres unités de soudage sans entraînement (9–18) sont reliées à la manière d'un train entre elles et à l'unité de soudage (8) présentant l'entraînement de déplacement (23–29) par des éléments de liaison (35, 36) pouvant être actionnés séparément, les unités de soudage sans entraînement (9–18) pouvant être décrochées du train aux positions déterminées selon leur position dans la file du train.

2. Machine à souder selon la revendication 1, caractérisée par le fait que les unités de soudage (8–18) sont disposées pendantes entre les rails (6, 7).

3. Machine à souder selon la revendication 1 ou 2, caractérisée par le fait que l'entraînement de déplacement (23–29) présente un moyen d'entraînement (23/30, 24/31) dans la zone des deux rails (6, 7), les moyens d'entraînement (23/30, 24/31) étant entraînés de manière synchrone.

4. Machine à souder selon la revendication 3, caractérisée par le fait que les moyens d'entraînement (23/30, 24/31) présentent un moyen de traction (30, 31) ou butée s'étendant respectivement le long de chaque rail (6, 7).

5. Machine à souder selon la revendication 4, caractérisée par le fait que l'entraînement par moteur (29) de l'entraînement de déplacement est monté sur l'une (8) des unités de soudage et est relié aux deux moyens de traction (30, 31) et/ou butées.

6. Machine à souder selon la revendication 4, caractérisée par le fait que l'entraînement par moteur de l'entraînement de déplacement actionne les deux moyens de traction et/ou butées auxquels l'unité de soudage est reliée.

7. Machine à souder selon l'une des revendications 1 à 6, caractérisée par le fait qu'un capteur de déplacement (33) d'une installation de commande est adjoint à l'unité de soudage entraînée (8), qui commande les courses de déplacement du train correspondant aux écartements des fils longitudinaux et le décrochage des unités de soudage séparées (9–18) par l'intermédiaire des éléments de liaison (35, 36).

Fig. 1

EP 0 187 277 B1

Fig. 2

EP 0187 277 B1

Fig. 3

Fig. 4